# EUROPÄISCHE PATENTSCHRIFT

(11) **EP 1 657 139 B1**
(45) Veröffentlichungstag und Bekanntmachung des Hinweises auf die Patenterteilung: **28.02.2007**
(21) Anmeldenummer: 05109650.1
(22) Anmeldetag: 17.10.2005
(51) Int. Cl.: B62D 7/15, B62D 6/00, B62D 111/00, B62D 113/00, B62D 131/00, B62D 137/00

(54) **Fahrdynamik-Regelsystem für ein zweispuriges zweiachsiges Kraftfahrzeug**
Vehicle dynamics control system for a two-track two-axle motor vehicle
Système de réglage de la dynamique de marche pour un véhicule à deux-essieus et à deux voies

(30) Priorität: 16.11.2004 DE 102004055178
(43) Veröffentlichungstag der Anmeldung: 17.05.2006
(73) Patentinhaber: Bayerische Motoren Werke Aktiengesellschaft, 80809 München (DE)
(72) Erfinder: Baumgarten, Goetz, Dr., 38106, Braunschweig (DE); Hofmann, Martin, 80687, München (DE); Webers, Klaus, Dr., 80935, München (DE)

(56) Entgegenhaltungen:
- EP-A- 0 827 852
- WO-A-20/04078560
- DE-A1- 4 035 256
- DE-A1- 10 254 211
- DE-A1- 10 338 706
- US-A1- 2002 007 239

## Beschreibung

Die Erfindung betrifft ein Fahrdynamik-Regelsystem für ein zweispuriges zweiachsiges Kraftfahrzeug, das zur Wankmomentabstützung ein System zur Veränderung der Aufteilung der Radaufstandskräfte auf das linke bzw. rechte Rad jeder Achse aufweist, wobei die von der Vorderachse und der Hinterachse übernommenen Anteile der Wankmomentabstützung in Abhängigkeit von der Gierrate und/oder der Querbeschleunigung und/oder dem Schwimmwinkel des Fahrzeugs auch im Hinblick auf eine nach einem Soll-Istwert-Vergleich erforderliche Stabilisierung des Fahrverhaltens in Kurven veränderbar sind. Zum technischen Umfeld wird auf die US 2002 0007239, die DE 697 13 694 T2 sowie auf die US 3,831,701 verwiesen.

Beispielsweise aus der erstgenannten Schrift ist es bekannt, dass durch Erzeugung eines sog. Wank-Kontermomentes im Fahrwerk eines Kraftfahrzeugs dieses bei Kurvenfahrt stabilisiert werden kann. Unter Berücksichtigung der aktuellen Fahrzeuggeschwindigkeit, des Lenkeinschlagwinkels und der Differenz zwischen einem hieraus abgeleiteten Sollwert für die Gierrate und dem Gierraten-Istwert wird dabei der Anteil des am Quer-Stabilisator der Fahrzeug-Hinterachse angelegten Wank-Kontermoments gegenüber demjenigen an der Vorderachse erhöht, wenn der Gier-Istwert kleiner als der Gier-Sollwert ist, woraufhin sich ein weniger untersteuerndes Fahrverhalten einstellt. Ist hingegen der Gierraten-Istwert größer als der Gierraten-Sollwert, so liegt ein tendenziell übersteuerndes Fahrverhalten vor, dem dadurch entgegengewirkt wird, dass der Anteil des am Quer-Stabilisator der Fahrzeug-Hinterachse angelegten Wank-Kontermoments verringert und der Wank-Kontermomentanteil an der Fzg.-Vorderachse entsprechend erhöht wird.

Beispielsweise aus der zweitgenanten Schrift ist ein Lenksystem eines zweispurigen Kraftfahrzeugs bekannt, bei dem einem vom Fahrer vorgegebenen Lenkwinkel an lenkbaren Fahrzeugrädern ein zusätzlicher Lenkwinkel überlagert werden kann. Bekanntlich lässt sich auch mit einem solchen Lenksystem das Fahrverhalten des Fahrzeugs in Kurvenfahrten stabilisieren, d.h. es kann eine Ist-Gierrate an eine geeignet ermittelte Soll-Gierrate angepasst werden, wozu bspw. auf die EP 1 129 916 A2 verwiesen wird. Eine solche Anpassung kann aber auch mittels lenkbaren Hinterrädern eines zweiachsigen Fahrzeugs erzielt werden, an denen unabhängig von einer Lenkvorgabe des Fahrers für lenkbare Vorderräder ein Radlenkwinkel eingestellt werden kann.

Bezüglich dieses bekannten Standes der Technik Verbesserungen aufzuzeigen, ist Aufgabe der vorliegenden Erfindung. Die Lösung dieser Aufgabe ist für ein Fahrdynamik-Regelsystem für ein zweispuriges zweiachsiges Kraftfahrzeug, das zur Wankmomentabstützung ein System zur Veränderung der Aufteilung der Radaufstandskräfte auf das linke bzw. rechte Rad jeder Achse aufweist, wobei die von der Vorderachse und der Hinterachse übernommenen Anteile der Wankmomentabstützung beispielsweise in Abhängigkeit von der Gierrate auch im Hinblick auf eine nach einem Soll-Istwert-Vergleich erforderliche Stabilisierung des Fahrverhaltens in Kurven veränderbar sind, dadurch gekennzeichnet, dass das Kraftfahrzeug ein System zur Veränderung des Radlenkwinkels von lenkbaren Fahrzeug-Rädern unabhängig von einer Lenkvorgabe des Fahrers aufweist und dass das Regelsystem zur Stabilisierung des Kurven-Fahrverhaltens neben der variablen Wankmomentabstützung abgestimmt hierauf einen geeigneten Radlenkwinkel einstellt, wobei alternativ zur oder neben der Gierrate auch die Querbeschleunigung des Fahrzeugs und/oder der Schwimmwinkel bei der Durchführung des Soll-Istwert-Vergleichs berücksichtigt werden. Vorteilhafte Weiterbildungen sind Inhalt der Unteransprüche.

Zunächst wird somit vorgeschlagen, bei der Stabilisierung des Fahrverhaltens in Kurven nicht nur die Gierrate des Fahrzeugs zu berücksichtigen, sondern zumindest eine weitere Kenngröße. Allgemein lässt sich das Kurven-Fahrverhalten eines zweispurigen Fahrzeugs in der Ebene bei gegebener Fahrgeschwindigkeit sowie vom Fahrer vorgegebenem Lenkwinkel nämlich durch zwei Freiheitsgrade beschreiben, nämlich entweder durch die Querbeschleunigung und den Schwimmwinkel (mit Schwimmwinkeländerungsgeschwindigkeit) oder durch den Schwimmwinkel (mit Schwimmwinkel-änderungsgeschwindigkeit) und die Gierrate oder durch die Gierrate und die Querbeschleunigung. (In diesem Zusammenhang kann bspw. auf die DE 102 15 465 A1 verwiesen werden). Mit der hier nun vorgeschlagenen Berücksichtigung einer weiteren Kenngröße wird - abweichend vom bekannten Stand der Technik, der lediglich die Gierrate berücksichtigt - die Genauigkeit des Regelverfahrens erheblich gesteigert.

Weiterhin wird quasi ein vernetztes System vorgeschlagen, bei dem neben dem System zur Veränderung der Aufteilung der Radaufstandskräfte ein aktives Lenksystem, d.h. ein System zur Veränderung des Radlenkwinkels lenkbarer Fahrzeug-Räder unabhängig von der Lenkvorgabe des Fahrers vorhanden ist. Hinsichtlich einer Stabilisierung des Fahrzeug-Fahrverhaltens bei Kurvenfahrt (aufgrund eines geeigneten Soll-Istwert-Vergleichs) sollen diese beiden Systeme aufeinander abgestimmt agieren bzw. entsprechend aufeinander abgestimmt angesteuert werden. Mit Hilfe des Systems zur Veränderung der Aufteilung der Radaufstandskräfte kann dann bevorzugt die Charakteristik, d.h. das für den Fahrer spürbare Fahrverhalten des Fahrzeugs in gewünschter Weise eingestellt werden und die eigentliche Stabilisierung des Fahrzeugs kann dann durch das System zur Veränderung des Radlenkwinkels lenkbarer Fahrzeug-Räder vorgenommen werden. D.h. dass primär eine geeignete Aufteilung der Wankmomentabstützung vorgenommen wird und in Fällen, in denen dies zur Soll-lstwert-Anpassung nicht ausreicht, ein geeigneter Radlenkwinkel eingestellt wird.

Ein grundsätzlich stark untersteuerndes Fahrzeug besitzt den Nachteil eines relativ geringen Querbeschleunigungspotentials und wirkt hierdurch für den Fahrer wenig agil, kann jedoch vorteilhafterweise bei schneller Kurvenfahrt den Fahrer nicht durch Übersteuern überraschen bzw. überfordern. Mit dem hier vorgeschlagenen Regelsystem ist es nun also möglich, zunächst ein weniger untersteuerndes oder sogar tendenziell übersteuerndes Fahrverhalten einzustellen, und zwar durch geeignete Aufteilung der WankmomentAbstützung auf die Vorderachse bzw. auf die Hinterachse des Fahrzeugs. Wenn dann dieses für den Fahrer zunächst angenehmere, da agilere Fahrverhalten zu einer geringfügig instabilen Fahrsituation führen sollte, so kann dieser Effekt durch das aktive Lenksystem, also durch Einstellung eines geeigneten Lenkwinkels, kompensiert werden.

Was das System zur Veränderung der Aufteilung der Radaufstandskräfte betrifft, so kann dieses zunächst sog. aktive Quer-Stabilisatoren aufweisen, d.h. an der Vorderachse und an der Hinterachse jeweils einen geteilten Stabilisator, dessen Stabilisatorhälften mittels eines geeigneten Aktuators gegeneinander verdrehbar sind. In einer besonders bevorzugten Ausführungsform können zusätzlich zu diesen auch noch den einzelnen Fahrzeug-Rädern zugeordnete hinsichtlich ihrer Charakteristik verstellbare Dämpfer vom Fahrdynamik-Regelsystem geeignet, d.h. im Sinne einer gewünschten Veränderung der Aufteilung der Radaufstandskräfte angesteuert werden. Es können aber auch den einzelnen Rädern zugeordnete aktive Federungssysteme, mit denen bekanntlich die Federkraft bzw. Federkennlinie veränderbar ist, von einem erfindungsgemäßen Fahrdynamik-Regelsystem geeignet angesteuert werden, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Fahrdynamik-Regelsystem für ein zweispuriges zweiachsiges Kraftfahrzeug, das zur Wankmomentabstützung ein System zur Veränderung der Aufteilung der Radaufstandskräfte auf das linke bzw. rechte Rad jeder Achse aufweist, wobei die von der Vorderachse und der Hinterachse übernommenen Anteile der Wankmomentabstützung in Abhängigkeit von der Gierrate und/oder der Querbeschleunigung und/oder dem Schwimmwinkel des Fahrzeugs auch im Hinblick auf eine nach einem Soll-Istwert-Vergleich erforderliche Stabilisierung des Fahrverhaltens in Kurven veränderbar sind,
**dadurch gekennzeichnet, dass** das Kraftfahrzeug ein System zur Veränderung des Radlenkwinkels von lenkbaren Fahrzeug-Rädern unabhängig von einer Lenkvorgabe des Fahrers aufweist und dass das Regelsystem zur Stabilisierung des Kurven-Fahrverhaltens neben der variablen Wankmomentabstützung abgestimmt hierauf einen geeigneten Radlenkwinkel einstellt.

2. Fahrdynamik-Regelsystem nach Anspruch 1,
**dadurch gekennzeichnet, dass** primär eine geeignete Aufteilung der Wankmomentabstützung vorgenommen wird und dass in Fällen, in denen dies zur Soll-lstwert-Anpassung nicht ausreicht, ein geeigneter Radlenkwinkel eingestellt wird.

3. Fahrdynamik-Regelsystem nach Anspruch 1 oder 2,
**dadurch gekennzeichnet, dass** durch die Aufteilung der Wankmomentunterstützung tendenziell ein übersteuerndes Verhalten des Fahrzeugs eingestellt ist.

4. Fahrdynamik-Regelsystem nach einem der vorangegangenen Ansprüche,
**dadurch gekennzeichnet, dass** das Regelsystem zur Veränderung der Aufteilung der Radaufstandskräfte neben aktiven geteilten Stabilisatoren, deren Stabilisatorhälften gegeneinander verdrehbar sind, den einzelnen Fahrzeug-Rädern zugeordnete hinsichtlich ihrer Charakteristik verstellbare Dämpfer geeignet ansteuert.

5. Fahrdynamik-Regelsystem nach einem der vorangegangenen Ansprüche,
**dadurch gekennzeichnet, dass** das Regelsystem zur Veränderung der Aufteilung der Radaufstandskräfte den einzelnen Rädern zugeordnete aktive Federungssysteme geeignet ansteuert.

## Claims

1. A driving dynamics control system for a two-track two-axle motor vehicle, which has, for rolling moment support, a system for changing the distribution of the wheel contact forces on the left-hand and right-hand wheel of each axle, wherein the proportions of the rolling moment support adopted by the front axle and the rear axle can also be changed as a function of the yaw rate and/or the transverse acceleration and/or the float angle of the vehicle with respect to a stabilisation of the driving behaviour on corners required according to an actual/current value comparison, **characterised in that** the motor vehicle has a system for changing the wheel steering angle of steerable vehicle wheels independently of a steering input from the driver and **in that** the control system for stabilising the cornering behaviour, apart from the variable rolling moment support, adjusts a suitable wheel steering angle coordinated therewith.

2. A driving dynamics control system according to claim 1, **characterised in that** a suitable distribution of the rolling moment support is primarily carried out and that, in cases, in which this is not sufficient for desired/actual value adaptation, a suitable wheel steering angle is adjusted.

3. A driving dynamics control system according to claim 1 or 2, **characterised in that** a tendency to an oversteering behaviour of the vehicle is adjusted by the distribution of the rolling moment support.

4. A driving dynamics control system according to any one of the preceding claims, **characterised in that** to change the distribution of the wheel contact forces, apart from active separated stabilisers, the stabiliser halves of which can be rotated relative to one another, the control system suitably activates dampers which are associated with the individual vehicle wheels and which can be adjusted with respect to their characteristics.

5. A driving dynamics control system according to any one of the preceding claims, **characterised in that** the control system suitably activates active suspension systems associated with the individual wheels to change the distribution of the wheel contact forces.

## Revendications

1. Système de réglage de la dynamique de marche pour un véhicule à deux essieux et à deux voies qui présente, pour supporter le couple de roulis, un système faisant varier la répartition des forces de contact s'exerçant sur la roue gauche et la roue droite de chaque essieu, les fractions du support du couple de roulis prises en charge par l'essieu avant et l'essieu arrière pouvant varier en fonction du taux de giration et/ou de l'accélération transversale et/ou de l'angle de flottement du véhicule et également en considération d'une stabilisation nécessaire du comportement du véhicule dans les virages, selon une comparaison de la valeur de consigne et de la valeur réelle,
**caractérisé en ce que**
le véhicule comporte un système qui fait varier l'angle de direction des roues directrices du véhicule, indépendamment de l'angle prescrit par le conducteur, et ce système de régulation, afin de stabiliser le comportement du véhicule en courbe, règle, en plus du support du couple de roulis variable ajusté pour cela, un angle de roue directrice approprié.

2. Système de réglage de la dynamique de marche selon la revendication 1,
**caractérisé en ce qu'**
on réalise d'abord une répartition appropriée du support du couple de roulis, et dans les cas où cela ne suffit pas pour ajuster la valeur de consigne à la valeur réelle, on règle un angle approprié de direction des roues.

3. Système de réglage de la dynamique de marche selon la revendication 1 ou 2,
**caractérisé en ce que**
par la répartition du support du couple de roulis, on règle une tendance à un comportement survireur du véhicule.

4. Système de réglage de la dynamique de marche selon une des revendications précédentes,
**caractérisé en ce que**
le système de réglage servant à faire varier la répartition des forces de contact des roues, en plus de stabilisateurs actifs divisés en deux moitiés pouvant tourner l'une par rapport à l'autre, commande de manière appropriée des amortisseurs associés aux roues individuelles, réglables en ce qui concerne leurs caractéristiques.

5. Système de réglage de la dynamique de marche selon une des revendications précédentes,
**caractérisé en ce que**
ce système de réglage, pour faire varier la répartition des forces de contact des différentes roues, commande de manière appropriée des systèmes de suspension associés aux roues individuelles.
